# NEUE EUROPÄISCHE PATENTSCHRIFT

(11) **EP 0 453 875 B2**
(45) Veröffentlichungstag und Bekanntmachung des Hinweises auf die Entscheidung über den Einspruch: **15.05.2002**
(45) Hinweis auf die Patenterteilung: 28.07.1993
(21) Anmeldenummer: 91105712.3
(22) Anmeldetag: 11.04.1991
(51) Int. Cl.: B23C 3/30, B23C 3/32, B23F 15/00

(54) **Maschine zur spanenden Metallbearbeitung**
Machine for metal cutting
Machine pour le travail du métal par enlèvement de copeaux

(30) Priorität: 26.04.1990 DE 4013327
(43) Veröffentlichungstag der Anmeldung: 30.10.1991
(73) Patentinhaber: Wera-Werk Hermann Werner GmbH & Co., D-42349 Wuppertal (DE)
(72) Erfinder: Garschagen, Friedrich A., W-5630 Remscheid (DE); Heym, Hans-Udo, W-5600 Wuppertal 11 (DE)
(74) Vertreter: Müller, Enno, Dipl.-Ing.

(56) Entgegenhaltungen:
- EP-A- 0 079 965
- EP-A- 0 375 899
- GB-A- 2 138 328
- AMERICAN MACHINIST 1. Juli 1983, NEW YORK Seiten 85 - 88; JOSEPH JABLONOWSKI:'GENERATING GEARS VIA SOFTWARE '

## Beschreibung

Die Erfindung betrifft eine Schlagmesser-Fräsmaschine gemäß Oberbegriff des Hauptanspruchs.

Eine derartige Maschine ist aus der DE-OS 26 50 955 bekannt, wobei der Werkzeugträger ein Schlagmesser trägt, zum gleichzeitigen Einfräsen mehrerer Nuten in ein umlaufendes Werkstück. Weiterhin bekannt sind Maschinen zur Herstellung von Zahnrädern, bei denen das Werkzeug als Wälzfräskopf ausgebildet ist. Die Zwanglaufeinrichtung zwischen Werkzeugspindel und Werkstückspindel als "elektronisches Getriebe" auszugestalten, ist bekannt z. B. aus wt Werkstattechnik 79 /1989, Seite 677. Hierbei wird ein hochgenauer Synchronlauf zwischen einer Leitachse und mehreren Folgenachsen durch elektronische Regel- und Steuereinheiten gewährleistet

Nachteilhaft an bekannten Maschinen ist jedoch ihre beschränkte Einsatzfähigkeit. Diese Maschinen sind nur zur Verzahnung der Werkstücke geeignet oder nur zur Drehbearbeitung. Es ist daher zum Beispiel nicht möglich, an einer gattungsgemäßen Maschine Dreharbeiten am rotierenden Werkstück durchzuführen, da die Werkstückdrehzahl nicht auf die für die nötige Schnittgeschwindigkeit benötigte Höhe einstellbar ist. Durch den Zwanglauf zwischen Werkzeugträger und Werkstückträger läuft letzterer immer um die Anzahl der Zähne des Werkstückes langsamer als der Werkzeugträger. Eine Vor- und Nachbehandlung der Werkstücke durch Drehen oder ähnliches erfordert eine weitere Bearbeitungsmaschine.

Der Erfindung liegt daher die Aufgabe zugrunde, eine gattungsgemäße Maschine anzugeben, bei der neben Fräsbearbeiten das Werkstück auch durch andere spanabhebende Bearbeitungsweisen bearbeitet werden kann.

Gelöst wird diese Aufgabe durch die kennzeichnenden Merkmale des Hauptanspruchs. Die Unteransprüche stellen vorteilhafte Weiterbildungen dar.

Zufolge der erfindungsgemäßen Ausgestaltung ist eine gattungsgemäße Maschine zur spanenden Metallbearbeitung gegeben, die sich insbesondere zur Vor- oder Nachbearbeitung von Zahnrädern mittels Drehen, Bohren oder Fingerfräsen eignet. Um z.B. einen zu verzahnenden Rohling zunächst vorzuformen, kann dieser mit dem auf dem Werkzeugschlitten sitzenden, von einem Träger getragenen Ergänzungswerkzeug bearbeitet werden. Es ist aber auch möglich, ein bereits verzahntes Werkstück nachträglich durch Drehen oder Fräsen, ohne erneutes Ein- und Ausspannen von Werkzeugen weiterzubearbeiten. Hierzu ist das Ergänzungswerkzeug durch eine Relativbewegung des Ergänzungswerkzeug-Trägers in Arbeitsstellung bringbar und in den Verlagerungsrichtungen des Werkzeugträgers dem Werkstück zustellbar. Die Relativbewegung kann z.B. durch eine Verschiebung eines Einstellschlittens des Ergänzungswerkzeug-Trägers erfolgen, wobei das Ergänzungswerkzeug auf dem Einstellschlitten befestigt ist. Hierzu tritt der Werkzeugträger in eine rückverlagerte Stellung und ist von der elektronischen Zwanglaufeinrichtung abgekoppelt. Das Ergänzungswerkzeug wird vom Gehäuse des Werkzeugträgerspannfutters getragen, daß auf dem Werkzeugschlitten sitzend mit diesem zusammen verlagerbar ist. Das Ergänzungswerkzeug ist als Drehmeißel, Fingerfräser oder Bohrer ausgestaltet. Durch die Abkoppelbarkeit der elektronischen Einzelantriebe von Werkzeugträger und Werkstückträger kann bei der Bearbeitung mit dem Drehmeißel als Erganzungswerkzeug, bei stillstehendem Werkzeugträger die Drehzahl des Werkstückträgers in einem großen Bereich variiert werden, so daß die zur Drehbearbeitung notwendigen hohen Schnittgeschwindigkeiten am Werkstück, das im Werkstückträger eingespannt ist,erreicht werden können. Die Werkstückträgerdrehzahl kann dabei beispielsweise in einem Bereich von 0 bis etwa 3000 U/min eingestellt werden. Durch die zusätzliche axiale Verlagerbarkeit des Werkzeugträgers (in Richtung seiner Erstreckungsachse) ist ein optimales Zustellen des Drehmeißels gewährleistet. Vorzugsweise sind sämtliche axialen Verlagerungen (lineare Verschiebungen) der Maschine elektronisch ansteuerbar und mit der Werkstückdrehung synchronisierbar. Hierdurch ist auch das Drehen von unrunden Profilen ermöglicht. Die Einsatzfähigkeit der Maschine kann weiterhin dadurch erhöht werden, wenn mehrere Drehmeißel vorgesehen sind und der Ergänzungswerkzeug-Träger als Werkzeugwechselvorrichtung gestaltet ist. Vorzugsweise ist letzterer als Revolver ausgestaltet. Die Verlagerbarkeit des Werkzeugträgers - im Wege der Werkzeugschlittenverschiebung - in Richtung seiner schwenkbaren Erstreckungsachse zusätzlich zur Verlagerbarkeit des Einfahrschlittens des Werkzeugträgers senkrecht zur Werkstückachse gewährleistet, daß der Drehmeißel immer im vorgeschriebenen Anstellwinkel zustellbar ist. Die Ausgestaltung des Werkstückträger-Antriebs als von der elektronischen Zwanglaufeinrichtung abkoppelbar ermöglicht weiterhin die schrittweise Steuerung der Werkstückspindel. Vorzugsweise ist bei diesem Betrieb das Ergänzungswerkzeug als Fingerfräser oder Bohrer ausgebildet. Bei diesem Betrieb mit stillstehendem Werkstück ist zur Bearbeitung das Ergänzungswerkzeug über Verlagerungen des Werkzeugträgers in den drei Raumrichtungen bewegbar. Wenn das umlaufende Werkzeug als Wälzfräskopf oder Schlagmesser ausgebildet ist, stehen nicht nur die beiden Einzelantriebe von Werkzeugträger und Werkstückträger in Zwanglauf zueinander, sondern auch mit dem Verlagerungsantrieb des Werkzeugträgers in der Richtung der Werkstückdrehachse. Hierdurch können mittels Wälzfräsen auch breite Zahnräder hergestellt werden oder im Falle des Schlagmesserfräsens eine schraubenförmige Profilierung. Beim Wälz- oder Schlagmesserfräsen erweist sich insbesondere die axiale Verschiebbarkeit des Werkzeugschlittens von Vorteil, da hierdurch mehrere unter Umständen auch verschiedene Werkzeuge axial versetzt voneinander angeordnet sein können. Es ist somit möglich, bei automatischer Werkstückzu- und Abführung, die Intervalle zwischen dem Ein- und Ausbau der Werkzeuge zu erhöhen, da in einfacher Weise durch axiale Verlagerung des Werkzeugschlittens ein Werkzeugwechsel erzielt werden kann. Der axiale Werkzeugwechsel erweist sich auch dann von Vorteil, wenn verschiedenartige Verzahnungen an einem Werkstück vorgenommen werden sollen. Es können darin verschiedenartige Werkzeuge in axialem Abstand am Werkzeugträger angeordnet sein.

In den nachstehenden Zeichnungen wird die Erfindung anhand von Ausführungsbeispielen erläutert. Es zeigt:
- Fig. 1: eine Gesamtansicht einer gattungsgemäßen Maschine,
- Fig. 2: eine schematische Darstellung der Antriebe einer erfindungsgemäßen Maschine in Ansicht,
- Fig. 3: eine Darstellung gemäß Fig. 2 in Seitenansicht,
- Fig. 4: eine Darstellung gemäß Fig. 2 in Draufsicht,
- Fig. 5: die Detailansicht eines Werkzeugträgers einer weiteren Ausführungsform und
- Fig. 6: eine Seitenansicht gemäß Fig. 5.

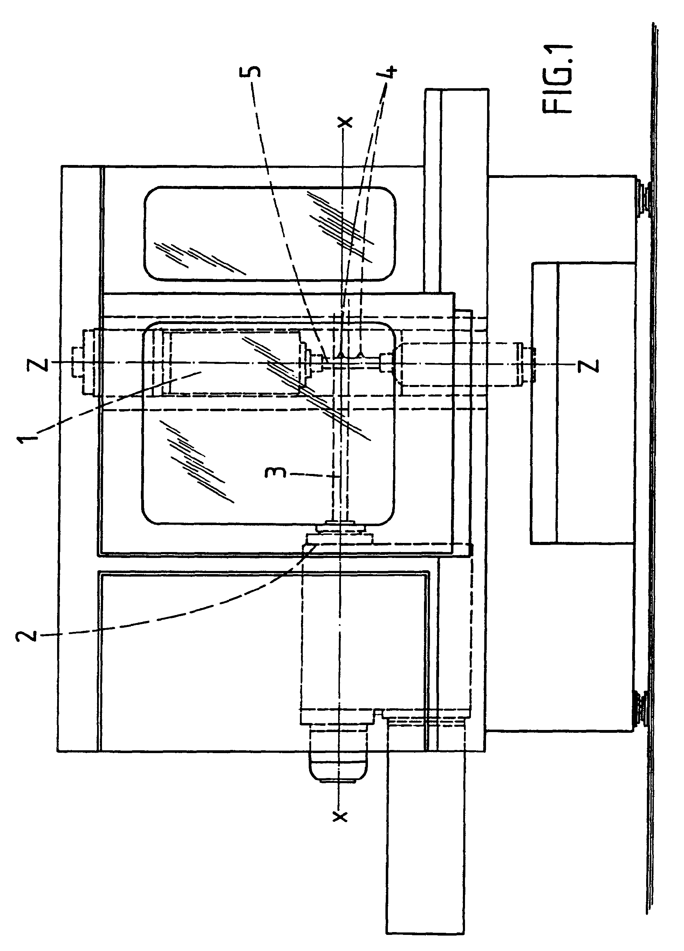

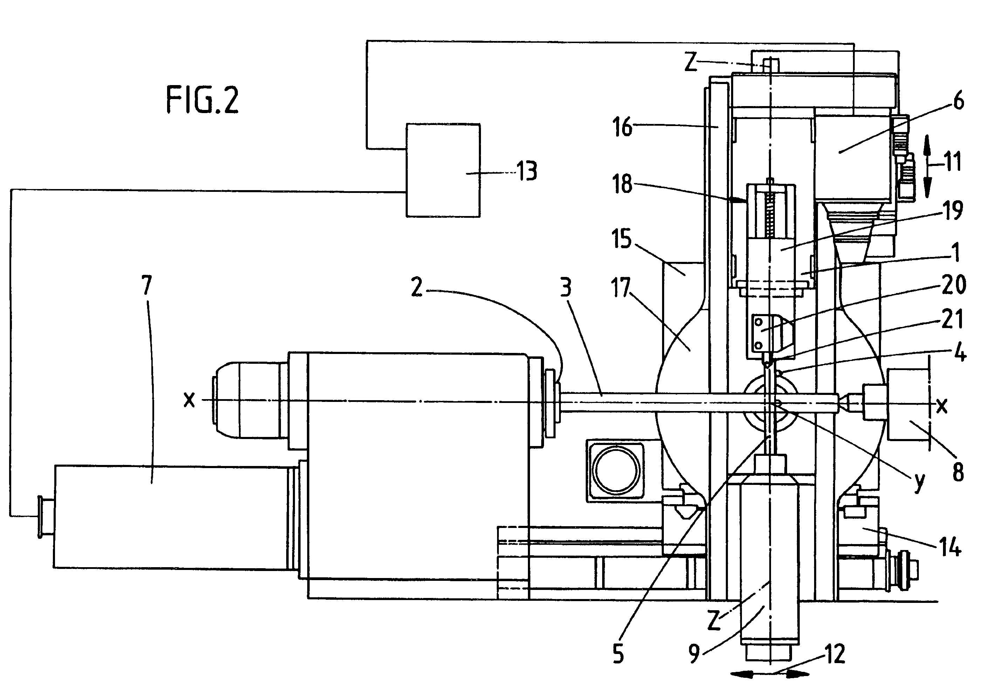

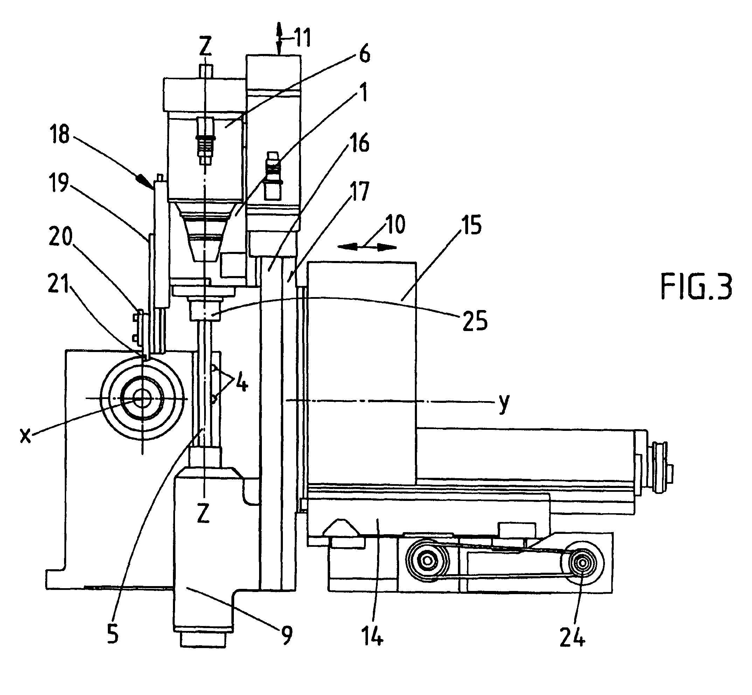

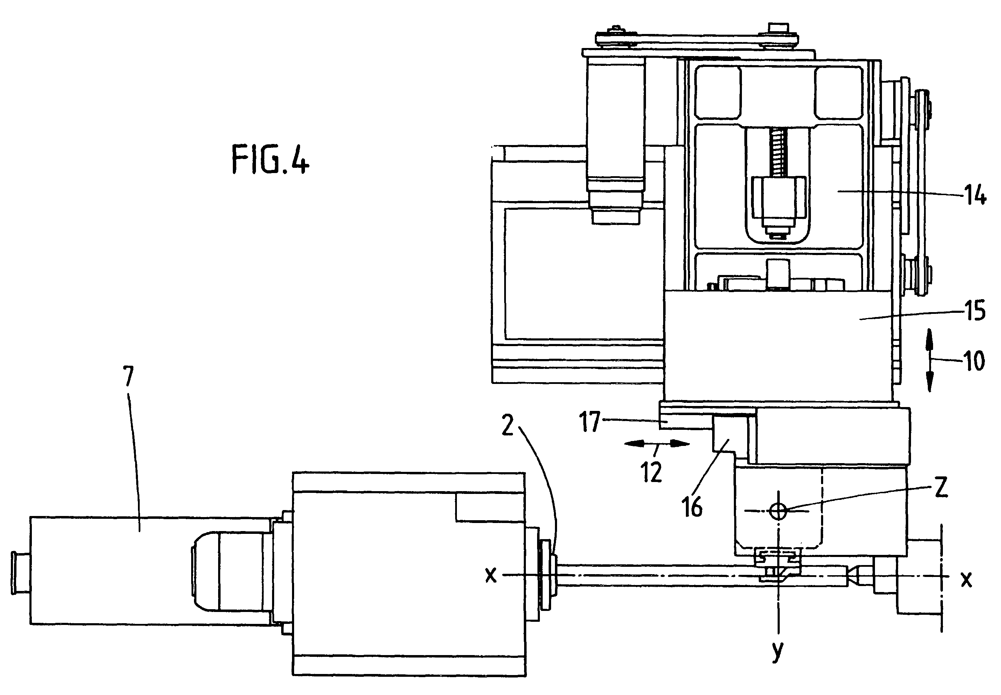

Die in Figur 1-4 dargestellte Maschine weist einen rotierenden, ortsfesten Werkstückträger 2 auf, der von einem elektrischen Einzelantrieb 7 angetrieben wird. In dem Spannfutter des Werkstückträgers 2 ist das Werkstück 3 an seinem einen Ende eingespannt. An seinem anderen Ende ist das Werkstück 3 durch einen Lagerbock 8 gehaltert. Die Rotationsachse von Werkstückträger 2 und Werkstück 3 bildet die x-Achse. Von der x-Achse beabstandet befinden sich Schlagmesser 4. Die Schlagmesser 4 sind an einem um die z-Achse rotierenden Werkzeugträger 5 angeordnet.Der Werkzeugträger 5 ist in einem Werkzeugträgerspannfutter 25 mit seinem einen Ende eingespannt. Mit seinem anderen Ende ist der Werkzeugträger 5 in einem Lagerbock 9 eingespannt Das Werkzeugträgerspannfutter 25 lagert in einem Gehäuse 1. Gehäuse 1, Werkzeugträger 5 und Lagerbock 9 sind einem in z-Richtung 11 verlagerbaren Werkzeugschlitten 16 zugeordnet. Der Werkzeugträger 5 wird von einem elektrischen Einzelantrieb 6 angetrieben. Die elektrischen Einzelantriebe 6, 7 für den Werkzeugträger 5 und für den Werkstückträger 2 werden von einer elektronischen Synchronisiereinrichtung 13 zwangsgesteuert.

Zur Zustellung des Werkzeuges 4 bei Verzahnarbeiten am Werkstück kann das Werkzeug in der y-Richtung 10 zugestellt werden. Hierzu ist ein Vorschubschlitten 15 vorgesehen, der von einem elektrischen Antrieb bewegtwerden kann. Der Vorschubschlitten 15 lagert auf einem Einfahrschlitten 14, der in x-Richtung ebenfalls durch einen elektrischen Antrieb 24 verlagerbar ist. Auf dem Vorschubschlitten 15 ist ein Schwenkträger 17 angeordnet, der um die senkrecht zur x- und zur z-Achse verlaufenden y-Achse schwenkbar ist. Drehfest mit dem Schwenkträger 17 verbunden, auf diesem jedoch in z-Richtung 11 ebenfalls durch einem elektrischen Antrieb verlagerbar, ist der Werkzeug-Schlitten 16 angeordnet, der Träger von Werkzeugträgerspannfutter 25 und Lagerbock 9 ist. X-Achse und Z-Achse stehen windschief zueinander, wobei die z-Achse um eine Achse y schwenkbar ist, die senkrecht sowohl x- als auch z-Achse schneidet.

Soweit beschrieben, lassen sich mit dieser Maschine Verzahnungen in bekannter Weise durchführen. Der Werkzeugträger 5 weist mehrere in z-Richtung axial voneinander getrennte Schlagmesser 4 auf. Dieses ermöglicht ein einfaches Wechseln der verwendeten Schlagmesser. Der Werkzeug-Schlitten 16 braucht lediglich in der z-Richtung derart verlagert werden, daß ein anderes Schlagmesser 4 in die Einsatzposition gebracht wird. An der Stellung der Achsen x, y, z relativ zueinander ändert sich bei dieser Verlagerung überhaupt nichts. Es wird lediglich das Werkzeug gewechselt.

Durch die unabhängige Verlagerbarkeit in z- und y-Richtung des Werkzeugschlittens 16 ist eine Zustellung eines darauf sitzenden Ergänzungswerkzeuges 21 in der von der y- und z-Achse aufgespannten Ebene möglich. Das Ergänzungswerkzeug 21 ist in diesem Ausführungsbeispiel als Drehmeißel ausgestaltet, das in einer Einspannvorrichtung 20 eingespannt ist, die fest auf einem Einstellschlitten 19 montiert ist. Der Einstellschlitten 19 ist auf einem Trägerbock längsverschieblich verlagerbar. Der Ergänzungswerkzeug-Träger 18, der aus Trägerbock, Einstellschlitten 19 und Werkzeugeinspannvorrichtung 20 besteht, ist mit seinem Trägerbock auf dem Gehäuse 1 des Werkzeugträgerspannfutter 25 befestigt (vgl. Fig. 1-4) Durch Verlagern des längsverschieblich montierten Einstellschlitten 19 in z-Richtung ist der Drehmeißel 21 in seine Arbeitsstellung bringbar, in welcher er spanabhebend am rotierenden Werkstück 3 angreift.

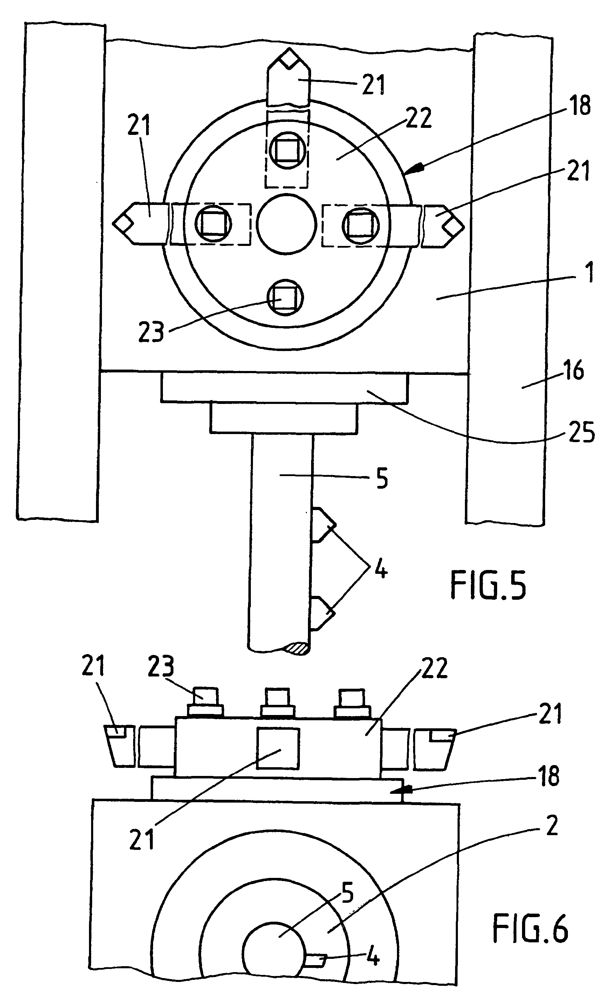

Die Figuren 5 und 6 zeigen eine weitere Ausgestaltung des Ergänzungswerkzeugträgers 18, der auf dem Gehäuse 1 des Werkzeugträgerspannfutters 25 montiert ist, als einen Werkzeugwechsler 22, der als Revolver ausgestaltet ist und jeweils um 90° versetzt vier Werkzeug positionen aufweist, von denen drei mit Drehmeißeln 21 bestückt sind. Durch Drehung des Werkzeugwechslers um seine Drehachse um jeweils 90° kann einer der drei Drehmeißel 21 in die Arbeitsstellung gebracht werden, die während des Verzahnens von der freien Werkzeugposition 23 eingenommen wird. Die freie Werkzeugposition 23 ist während des Verzahnens in Richtung des Werkzeugträgers 5 so ausgerichtet, daß bei den Verzahnarbeiten kein störender Drehmeißel in den Bearbeitungsraum einragt. Durch Rotation des Werkzeugwechslers (Revolvers) 22 können die Drehmeißel in Position 23 gebracht werden, wobei dann der Drehmeißel dem Werkstück 3 zustellbar ist durch Verlagerung des Vorschubschlittens 15 in y-Richtung und Werkzeugschlitten in z-Richtung.

Zum Vor- bzw. Nacharbeiten von Zahnrädern mittels Drehen wird die Rotation des Werkzeugträgers 5 stillgelegt, wobei der elektrische Antrieb 6 des Werkzeugs und der elektrische Antrieb 7 des Werkstücks von der Synchronisiereinrichtung 13 abgekoppelt werden. Der elektrische Antrieb 7 des Werkstückträgers 2 läuft nunmehr so, daß die zum Drehen benötigten hohen Schnittgeschwindigkeiten erreicht werden können. Durch Verlagerung von Vorschubschlitten 15 und Werkzeugschlitten 16 in y- bzw. z-Richtung wird der Drehmeißel 21 dem Werkstück 3 zugestellt. Die Verlagerung des Drehmeißels in x-Richtung erfolgt durch die Verlagerung des Einfahrtschlitten 14.

Ein mittels Schlagmesser 4 verzahntes Werkstück 3 kann somit in einfacher Weise an den Stirnflächen der Verzahnung entgratet werden. Der bei der Verzahnung um die Anzahl der Zähne des Werkstückes langsamer als der Werkzeugträger 5 drehende Werkstückträger 2 wird nach dem Verzahnen von der Zwanglaufeinrichtung 13 abgekuppelt, so daß sie über den Einzelantrieb 7 direkt angesteuert werden kann. Die Drehzahl des Werkstücks 3 hängt nun nicht mehr von der maximalen Drehzahl des Werkzeugträgers 5 ab und kann deshalb derart erhöht werden, daß die zum Abdrehen nötwendigen hohen Schnittgeschwindigkeiten erreicht werden. Es ist vorgesehen, daß die elektrischen Antriebe von Vorschubschlitten 15, Einfahrschlitten 14 und Werkzeugschlitten 16 mit dem Einzelantrieb 7 synchronisierbar sind. Eine solche Ausgestaltung ermöglicht es, unrunde Profile zu drehen. Während der Dreharbeiten ist auch der Werkzeugantrieb 6 von der Zwanglaufeinrichtung abgekoppelt und steht still.

Es ist ebenfalls vorgesehen, daß das Ergänzungswerkzeug ein Bohrer oder ein Fingerfräser ist. Auch hierbei kann das Ergänzungswerkzeug einem Werkzeugwechsler zugeordnet sein. Bei der Bearbeitung eines Werkstückes 3 mit letztgenannten Werkzeugen ist vorgesehen, daß der Werkstückträger 2 sich nicht kontinuierlich dreht, sondern schritttweise weitergedreht wird. Die Bearbeitung des Werkstückes erfolgt dann bei stillstehendem Werkstück.

## Patentansprüche

1. Schlagmesser-Fräsmaschine mit im Zwanglauf zueinander rotierendem Werkstückträger und Werkzeugträger, dessen windschief zur Werkstückträger-Drehachse (x) verlaufende einstellbare Achse (z) um eine Achse (y) schwenkbar und feststellbar ist, welche die Drehachse (x) des Werkstückes und die Werkzeugträgerachse (z) rechtwinklig schneidet, wobei der Werkzeugträger in Richtung der Werkstückträger-Drehachse (x) und der Werkzeugträger-Schwenkachse (y) verlagerbar ist, **gekennzeichnet durch** zwei über eine elektronische Zwanglaufeinrichtung (13) verbundene und je für sich von dieser abkoppelbare elektrische Einzelantriebe (6, 7) für Werkstückträger (2) und Werkzeugträger (5), welcher seinerseits auf einem längs der Werkzeugträgerachse (z) verschiebbaren Werkzeugschlitten (16) sitzt, auf dem zusätzlich ein **durch** Relativbewegung zum Werkzeugschlitten (16) in Arbeitsstellung bringbarer Ergänzungswerkzeug-Träger (18) angeordnet ist, wobei die Drehzahl des Einzelantriebes (7) für den Werkstückträger auf eine zum Abdrehen notwendige Schnittgeschwindigkeit bringbar ist oder die Werkstückträgerdrehachse (x) stillsetzbar oder schrittweise drehbar ist und der Ergänzungswerkzeug-Träger (18) ein oder mehrere Drehmeißel (21), Fingerfräser oder einen Bohrer trägt.

2. Maschine nach Anspruch 1, **dadurch gekennzeichnet, dass** der Ergänzungswerkzeug-Träger (18) vom Gehäuse (1) des Werkzeugträgerspannfutters (25) getragen wird.

3. Maschine nach Anspruch 1, **dadurch gekennzeichnet, dass** der Werkzeugträger (5) bei in Arbeitsstellung gebrachtem Ergänzungswerkzeug (21) eine rückverlagerte Position einnimmt und die Einzelantriebe (6, 7) von der Zwanglaufeinrichtung (13) abgekoppelt sind.

4. Maschine nach einem oder mehreren der vorhergehenden Ansprüche, **dadurch gekennzeichnet, dass** der Ergänzungswerkzeug-Träger (18) als Werkzeugwechselvorrichtung (22) gestaltet ist.

5. Maschine nach Anspruch 4, **dadurch gekennzeichnet, dass** die Werkzeugwechselvorrichtung als Revolver (22) ausgebildet ist, wobei eine Werkzeugposition (23) nicht besetzt ist.

6. Maschine nach einem oder mehreren der vorhergehenden Ansprüche, **dadurch gekennzeichnet, dass** die Werkzeugträgerverlagerungen in den drei Raumrichtungen (x-, y-, z-Richtung) elektronisch ansteuerbar sind und mit der Drehverlagerung des Werkstücks synchronisierbar sind.

7. Maschine nach einem oder mehreren der vorhergehenden Ansprüche, **dadurch gekennzeichnet, dass** die Werkstückspindeldrehzahl in einem Bereich von 0-3000 U/min einstellbar ist.

8. Maschine nach einem oder mehreren der vorhergehenden Ansprüche, **dadurch gekennzeichnet, dass** die Verlagerbarkeit des Werkzeugschlittens (16) in der Richtung der Werkstückträgerdrehachse (x) elektronisch angesteuert ist und mit den Drehbewegungen von Werkzeugträger (5) und Werkstückträger (2) in Zwanglauf steht.

9. Maschine nach einem oder mehreren der vorhergehenden Ansprüche, **dadurch gekennzeichnet, dass** der Werkzeugträger (5) ein oder mehrere Schlagmesser (x) trägt.

10. Maschine nach einem oder mehreren der vorhergehenden Ansprüche, **dadurch gekennzeichnet, dass** die vom Werkzeugträger (5) getragenenWerkzeuge (4) auf der Werkzeuträgergachse (x) axial versetzt angeordnet sind.

## Claims

1. Fly cutter milling machine with a workpiece carrier (2) and tool carrier (5) rotating in positive drive relative to each other, whose adjustable axis (z) running obliquely to the workpiece carrier axis of rotation (x) is pivotable and lockable about an axis (y) which intersects with the axis of rotation (x) of the workpiece and the tool carrier axis (z) at right angles, wherein the tool carrier is displaceable in the direction of the workpiece carrier axis of rotation (x) and the tool carrier pivot axis (y), **characterised by** two separate electric drives (6, 7) for the workpiece carrier (2) and the tool carrier (5) connected by an electronic positive drive device (13) and each capable of being uncoupled therefrom independently, which tool carrier (5) is in turn seated on a tool carriage (16) which is slidable along the tool carrier axis (z) and on which is arranged in addition a supplementary tool carrier (18) which can be brought into the working position by a relative movement to the tool carriage (16), wherein the number of revolutions of the separate drive (7) for the workpiece carrier can be adjusted to a cutting speed necessary for switching off, or the workpiece carrier axis of rotation (x) can be stopped or rotated in steps and the supplementary tool carrier (18) carries one or more rotary cutting tools (21), end-milling cutters or a drill.

2. Machine according to claim 1, **characterised in that** the supplementary tool carrier (18) is carried by the housing (1) of the tool carrier chuck (25).

3. Machine according to claim 1, **characterised in that** the tool carrier (5) when the supplementary tool (21) is brought into the working position adopts a returned position and the separate drives (6, 7) are uncoupled from the positive-drive device (13).

4. Machine according to one or more of the preceding claims, **characterised in that** the supplementary tool carrier (18) is designed as a tool changing device (22).

5. Machine according to claim 4, **characterised in that** the tool changing device is constructed as a turret (22), wherein one tool position (23) is not occupied.

6. Machine according to one or more of the preceding claims, **characterised in that** the tool carrier displacements in the three spatial directions (x, y and z directions) can be controlled electronically and synchronised with rotary displacement of the workpiece.

7. Machine according to one or more of the preceding claims, **characterised in that** the speed of the workpiece spindle is adjustable within a range of 0-3000 r.p.m.

8. Machine according to one or more of the preceding claims, **characterised in that** the displaceability of the tool carriage (16) in the direction of the axis of rotation (x) of the workpiece carrier is controlled electronically and in positive-drive relationship to the rotary movements of tool carrier (5) and workpiece carrier (2).

9. Machine according to one or more of the preceding claims, **characterised in that** the tool carrier (5) carries one or more fly cutters (x).

10. Machine according to one or more of the preceding claims, **characterised in that** the tools (4) carried by the tool carrier (5) are arranged axially offset on the tool carrier axis (x).

## Revendications

1. Machine de fraisage à couteaux (frappeurs) comprenant, reliés en rotation selon un rapport de synchronisation fixe, un support de pièce à usiner et un porte-outil dont l'axe réglable (z) est disposé en dévers par rapport à l'axe de rotation (x) du support de la pièce à usiner et qui peut pivoter et être fixé en une position fixe autour d'un axe (y) qui coupe perpendiculairement l'axe de rotation (x) de la pièce à usiner et l'axe du porte-outil (z), le porte-outil étant susceptible de se déplacer dans la direction de l'axe de rotation du support de pièce à usiner (x) et de l'axe de pivotement (y) du porte-outil, **caractérisée par** deux entraînements électriques individuels (6, 7) pour le support de pièce à usiner (2) et pour le porte-outil (5), qui sont reliés par un dispositif électronique de synchronisation (13) et qui sont chacun capables d'être découplés indépendamment de ce dernier, le porte-outil (5) étant, pour sa part, en appui sur un chariot porte-outil (16), susceptible de se déplacer le long de l'axe (z) du porte-outil et sur lequel, de façon supplémentaire, est disposé un porte-outil accessoire (18) susceptible d'être amené en position de travail par un déplacement relatif par rapport au chariot porte-outil (16), et en ce que la vitesse de rotation de l'entraînement individuel (7) pour le porte-outil est susceptible d'être amenée à une vitesse de coupe nécessaire pour le tournage ou bien l'axe de rotation (x) du porte-outil est susceptible d'être immobilisé ou de tourner pas à pas et le porte-outil accessoire (18) porte un ou plusieurs outils de tournage (21), des fraises à queue ou un foret.

2. Machine selon la revendication 1, **caractérisée en ce que** le porte-outil accessoire (18) est porté par le boîtier (1) du mandrin de serrage (25) du porte-outil.

3. Machine selon la revendication 1, **caractérisée en ce que** le porte-outil (5) prend, quand l'outil accessoire (2) est amené en position de travail, une position de retrait, les entraînements individuels (6, 7) étant découplés du dispositif de synchronisation (13).

4. Machine selon l'une ou plusieurs des revendications précédentes, **caractérisée en ce que** le porte-outil accessoire (18) est réalisé sous la forme d'un dispositif de changement d'outils (22).

5. Machine selon la revendication 4, **caractérisée en ce que** le dispositif de changement d'outil est réalisé en forme de revolver ou de tourelle (22), l'une (23) des positions prévues pour un outil n'étant pas occupée.

6. Machine selon l'une ou plusieurs des revendications précédentes, **caractérisée en ce que** les déplacements dans les trois directions spatiales (directions x, y, z) du porte-outil sont susceptibles d'être commandées électroniquement et d'être synchronisées avec le déplacement rotatif de la pièce à usiner.

7. Machine selon l'une ou plusieurs des revendications précédentes, **caractérisée en ce que** la vitesse de rotation de la broche de la pièce à usiner est réglable dans une gamme de 0 à 3000 tours par minute.

8. Machine selon l'une ou plusieurs des revendications précédentes, **caractérisée en ce que** le déplacement du chariot porte-outil (16) selon l'axe de rotation (x) du support de la pièce à usiner est commandé électroniquement et en synchronisation avec la rotation du porte-outil (5) et du support (2) de pièce à usiner.

9. Machine selon l'une ou plusieurs des revendications précédentes, **caractérisée en ce que** le porte-outil (5) porte un ou plusieurs couteaux (frappeurs) (x).

10. Machine selon l'une ou plusieurs des revendications précédentes, **caractérisée en ce que** les outils (4) portés par le porte-outil (5) sont disposés décalés axialement sur l'axe (x) du porte-outil.
